# EUROPÄISCHE PATENTSCHRIFT

(11) **EP 0 821 798 B1**
(45) Veröffentlichungstag und Bekanntmachung des Hinweises auf die Patenterteilung: **10.02.1999**
(21) Anmeldenummer: 96913515.1
(22) Anmeldetag: 19.04.1996
(51) Int. Cl.: G02B 5/122, G02B 7/18

(54) **RETROREFLEKTOR**
RETROREFLECTOR
RETROREFLECTEUR

(30) Priorität: 20.04.1995 DE 19514129; 19.04.1996 DE 19615529
(43) Veröffentlichungstag der Anmeldung: 04.02.1998
(73) Patentinhaber: Leica AG, CH-9435 Heerbrugg (CH)
(72) Erfinder: AUERSWALD, Christoph, CH-9436 Balgach (CH); KOLLER, Stefan, CH-9050 Appenzell (CH); LÄMMER, Barbara, CH-9445 Rebstein (CH); NESENSOHN, Markus, A-3832 Sulz (AT); SZALMASSY, Zoltan, A-6900 Bregenz (AT)
(74) Vertreter: Stamer, Harald, Dipl.-Phys.
(86) Internationale Anmeldenummer: EP9601641
(87) Internationale Veröffentlichungsnummer: WO9633428

(56) Entgegenhaltungen:
- DE-A- 4 226 266
- US-A- 3 836 275

## Beschreibung

Die Erfindung betrifft einen Retroreflektor bzw. eine aus mehreren Retroreflektoren zusammengesetzte Retroreflektor-Anordnung. Ein Retroreflektor ist ein optisches Bauelement, das aus einem Tripelspiegelprisma besteht. Dieses weist drei Prismenflächen auf, die im rechten Winkel zueinander stehen und eine räumliche Würfelecke bilden. Jede dieser Prismenflächen stellt ein rechtwinkliges, gleichschenkliges Dreieck dar. Die vierte Begrenzungsfläche eines derartigen Tripelspiegelprismas wird von einem gleichseitigen Dreieck gebildet. Diese Fläche ist gleichzeitig Ein- bzw. Austrittsfläche für einen Lichtstrahl. Jeder von außen kommende Strahl wird an allen drei (gleichschenkligen) Flächen total reflektiert und läuft parallel zur Einfallsrichtung und symmetrisch zum Zentralstrahl zurück. Beim Drehen des Tripelspiegelprismas um eine beliebige Achse wird die Richtung des zurückgeworfenen Strahls nicht verändert.

Derartige Retroreflektoren werden in vielen Bereichen der Optik, beispielsweise im freien Gelände im Bereich des optischen Vermessungswesens, verwendet. Dabei hat es sich als Nachteil herausgestellt, daß der Betrieb eines solchen Retroreflektors durch Witterungseinflüsse, z.B. durch Anfrieren von Wasser, negativ beeinflußt werden kann.

Aus der DE-A1-42 26 266 ist ein beheizbarer Retroreflektor bekannt, wobei die Beheizung einer Prismenplatte in der Weise erfolgt, daß ein im Abstand von dieser Platte angeordnetes elektrisches Heizelement vorgesehen ist, welches den Luftzwischenraum zwischen Heizelement und Prismen platte erwärmt und dadurch eine indirekte, homogene Beheizung bewirkt. Die Prismenplatte kann auf der Innenseite eine Metall-Verspiegelung aufweisen, der sich eine wärmeabsorbierende Lackschicht anschließt.

Es ist daher die Aufgabe der vorliegenden Erfindung, einen Retroreflektor bereitzustellen, der auch unter extremen Witterungseinflüssen, insbesondere Kälteeinflüssen, voll funktionsfähig bleibt.

Diese Aufgabe wird erfindungsgemäß bei einem Retroreflektor der eingangs genannten Art durch die kennzeichnenden Merkmale des Hauptanspruchs gelöst. Weitere Ausgestaltungen ergeben sich aus den Unteransprüchen.

Die Erfindung wird nunmehr anhand der Zeichnungen näher erläutert. Es zeigen in rein schematischer Darstellung:
- Fig.1a:: eine Rückansicht eines Retroreflektors;
- Fig.1b:: eine Seitenansicht eines Retroreflektors;
- Fig.2:: eine erste erfindungsgemäße Ausführungsform eines Retroreflektors;
- Fig.3:: eine zweite erfindungsgemäße Ausführungsform des Retroreflektors;
- Fig.4a:: eine Seitenansicht gemäß Fig.1b mit transparentem Substrat und zusätzlicher transparenter, beheizbarer Schicht;
- Fig.4b:: eine Draufsicht des in Fig.4a Dargestellten;
- Fig.5:: ein Detail-Ausschnitt der in den Fig. 4a, 4b dargestellten Ausführungsformen mit zusätzlicher Klebe-/Kitt-Schicht zwischen dem transparenten Substrat und der Begrenzungsfläche.

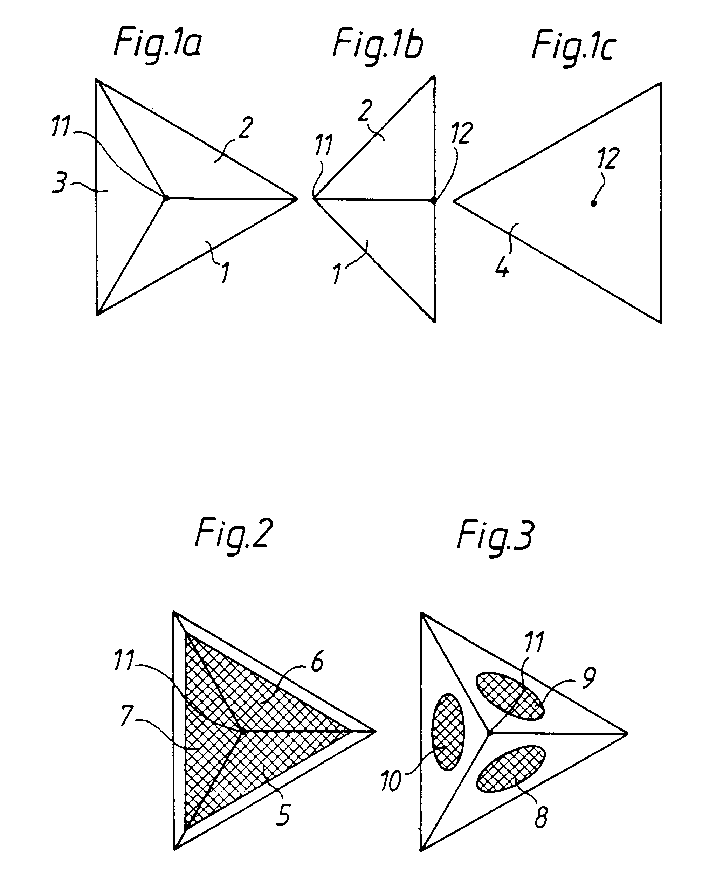

In den Figuren 1a bis 1c sind verschiedene Ansichten eines Tripelspiegelprismas dargestellt. Man erkennt in Fig.1a die drei gleichschenkligen Begrenzungsflächen 1,2 und 3, sowie ihren gemeinsamen Schnittpunkt, der gleichzeitig eine Würfel-Ecke 11 darstellt. In Fig.1b ist eine Seitenansicht des in Fig.1a Dargestellten gezeigt, während in Fig.1c eine Draufsicht auf die Ein- bzw. Austrittsfläche des Tripelspiegelprismas, die ein gleichseitiges Dreieck bildet, dargestellt ist. Eine nicht mit dargestellte Mittelsenkrechte auf der Fläche 4 verläuft durch die Würfel-Ecke 11. Diese Mittelsenkrechte stellt gewissermaßen eine trigonale Symmetrieachse dar. Sie ist gleichzeitig die Raumdiagonale durch einen gedachten Würfel, dessen eine "Raum"-Ecke 11 in Fig.1a dargestellt ist.

In Fig.2 erkennt man, daß die drei kongruenten Begrenzungsflächen 1, 2 und 3 zu einem Großteil flächenbelegt sind. Dabei handelt es sich um flächige Heizelemente 5 bis 7, die beispielsweise mittels eines für die Leitung von thermischer Energie geeigneten Klebers auf diesen Begrenzungsflächen direkt aufgebracht sind. Auf Grund der rein schematischen Darstellung ist darauf verzichtet worden, Leitungszüge mit darzustellen, die die Verbindung zwischen diesen Heizelementen 5 bis 7 und einer externen Energiequelle herstellen. Bei der in Fig.2 gezeigten Darstellung genügt - wie ersichtlich - ein Leitungszug, da alle drei Heizelemente 5, 6 und 7 elektrisch leitend miteinander verbunden sind. Es ist indes auch möglich, anders geartete geometrische Heizelement-Formen vorzusehen, beispielsweise Dreiecksformen, die nicht untereinander verbunden sind.

In Fig.3 sind derartige kreisförmige Heizelemente 8 bis 10 dargestellt; natürlich ist es auch möglich, andere kurvenbegrenzte Flächenformen vorzusehen. Die trigonale Symmetrieachse des Retroreflektors steht im Falle der Fig.3 auf der Zeichenebene und durchstößt den Punkt 11. Dreht man die Kreisfläche 8 um 120°, so befindet sie sich in Deckung mit der Fläche 10 und diese nach einer weiteren Drehung um 120° wiederum mit der Fläche 9. Da ein Tripelspiegel hochpräzise gearbeitet sein muß, ist es auch von Vorteil, wenn die aufgebrachten Heizelemente größengleich, flächengleich und positionsgleich (bezüglich der trigonalen Symmetrieachse) aufgebracht werden, um lokal bedingte unterschiedliche thermische Ausdehnungen zu vermeiden, die zu einer Beeinträchtigung des Gesamtsystems führen könnten.

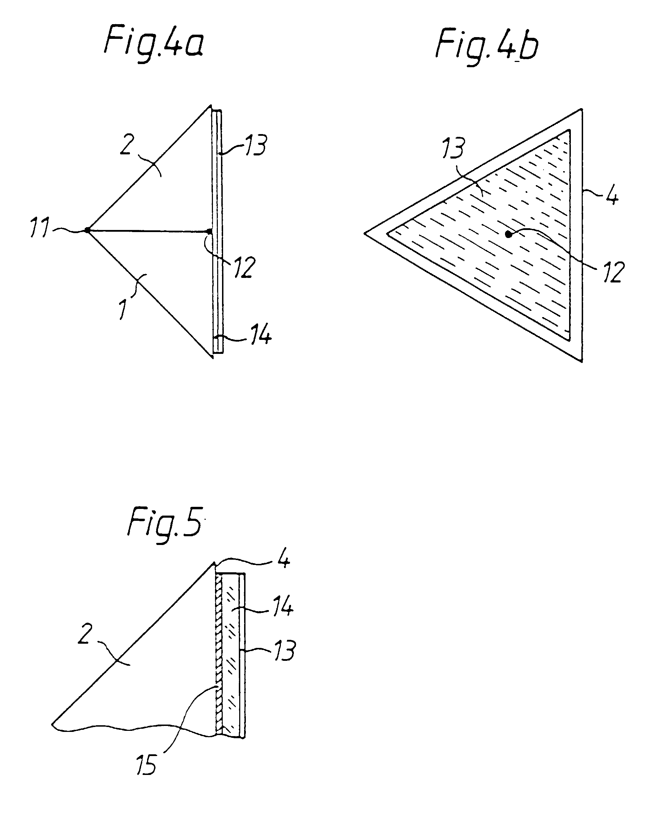

Es ist von Vorteil, die Heizelemente als flächige Heizfolien auszubilden, die direkt auf die Begrenzungsflächen 1 bis 3 aufgebracht werden. Natürlich ist es auch möglich, daß die Begrenzungsflächen 1 bis 3 zunächst eine Schicht bzw. ein Schichtsystem aufweisen, die bzw. das zur Erhöhung der Reflexion der einfallenden elektromagnetischen Strahlung dient. Eine bevorzugte Ausführungsform ist in den Fig. 4a und 4b dargestellt. Die gleichseitige Begrenzungsfläche 4 weist ein transparentes Substrat 14 in Form einer Platte oder einer Scheibe auf, die bzw. das zur Verminderung der Reflexion der einfallenden elektromagnetischen Strahlung dient. Auf dem transparenten Substrat 14 befindet sich noch eine elektrisch beheizbare transparente Schicht 13.

Die Heizelemente 5 bis 10 bzw. die transparente Schicht 13 können mittels an sich bekannter Abscheideverfahren, wie Vakuumverdampfung, Sputtern oder dergleichen, direkt auf die Begrenzungsflächen 1 bis 4 aufgebracht werden. Auch ist es möglich, das Substrat 14 mittels an sich bekannter Verbindungstechniken auf der Eintrittsfläche 4 zu befestigen.

Nach einer weiteren Ausgestaltung der vorliegenden Erfindung wird das Heizelement mittels an sich bekannter mechanischer Haltevorrichtungen vor der Eintrittsfläche 4 - vorzugsweise austauschbar - befestigt.

Dabei ist es natürlich auch möglich, daß die Schicht 13 bzw. das Substrat 14 nicht die gesamte Eintrittsfläche 4 bedeckt. Vorteilhafterweise ist aber immer darauf zu achten, die elektrisch beheizbare Fläche(n) symmetrisch bezüglich des jeweiligen Flächenmittelpunkts jeder Fläche des Tripelprismas - dies wäre bei der Fläche 4 beispielsweise der Punkt 12 - anzuordnen. Demgemäß wurde, wie aus Fig. 4b erkennbar, die transparente Schicht 13 ebenfalls als gleichseitiges Dreieck ausgebildet.

Die Heizfolien stehen im Kontakt mit nicht dargestellten Leitungszügen, welche eine elektrische Verbindung zu einer Energiequelle herstellen.

Normalerweise besteht der Retroreflektor aus optischem Glas; es ist indes auch möglich, ihn beispielsweise aus Glaskeramik oder aus Quarzglas herzustellen. Auch das Substrat 14, das als planparallele Platte bzw. Scheibe ausgebildet ist, kann entweder aus Glas, Glaskeramik, Quarzglas oder organischem Material bestehen. Von besonderem Vorteil ist es, den erfindungsgemäßen Retroreflektor in einem Gehäuse unterzubringen, das außerdem die zur Steuerung der Heizleistung verwendete Elektronik aufnimmt.

Es liegt im Rahmen der vorliegenden Erfindung, Retroreflektoren gleicher Art zu einer Gruppe in Array- oder Matrix-Anordnung zusammenzufassen.

Die Vorteile der vorliegenden Erfindung liegen gegenüber den bekannten Vorrichtungen insbesondere darin, daß sie einfach in der Herstellung und störungsunanfällig auch in extremen Betriebssituationen sind. Hinzu kommt noch der leichte Einbau in bestehende Anlagen. Von besonderem Vorteil ist der erfindungsgemäße Retroreflektor dadurch, daß ein Anfrieren von Wasser durch die vorgeschlagene direkte Beheizung komplett verhindert werden kann. Dadurch ist die Betriebs- und Funktionssicherheit insbesondere im Außenbetrieb bei extremen Temperatur- und Feuchtigkeitsschwankungen uneingeschränkt gewährleistet.

### Bezugsziffern-Liste

- 1-3:: gleichschenklige Begrenzungsflächen
- 4:: gleichseitige Begrenzungsfläche (Ein-/Austrittsfläche)
- 5- 7:: flächige Heizelemente
- 8-10: kreisförmige Heizelemente
- 11:: Würfel-Ecke (gemeinsamer Schnittpunkt von (1), (2) und (3))
- 12:: Auflagepunkt der Mittelsenkrechten auf (4)
- 13:: (elektrisch beheizbare) transparente Schicht auf (4) bzw. (14)
- 14:: transparentes Substrat (Platte, Scheibe)
- 15:: Klebe-/Kitt-Schicht

## Patentansprüche

1. Beheizbarer Retroreflektor, welcher als Vollkörper in Form eines Tripelspiegelprismas ausgebildet ist und drei gleichschenklige, dreieckige Prismenflächen (1,2,3) sowie eine gleichseitige, dreieckige Prismenfläche (4) aufweist, wobei der Retroreflektor eine elektrische Wärmequelle zur Erwärmung der Prismenflächen aufweist,
**dadurch gekennzeichnet,** daß die elektrische Wärmequelle aus mehreren elektrischen Heizelementen (5,6,7; 8,9,10; 13) besteht und daß zumindest die drei gleichschenkligen Prismenflächen (1-3) des Tripelspiegelprismas von der Wärmequelle, die sich in unmittelbarem Kontakt zu diesen Flächen befindet, direkt und gleichwirkend beheizt werden.

2. Retroreflektor nach Anspruch 1, **dadurch gekennzeichnet,** daß an den gleichschenkligen Prismenflächen (1-3) mindestens je ein Heizelement (5-7; 8-10) angebracht ist.

3. Retroreflektor nach Anspruch 2, **dadurch gekennzeichnet,** daß die Heizelemente (5-10) als Heizfolien ausgebildet sind.

4. Retroreflektor nach mindestens einem der Ansprüche 2 und 3, **dadurch gekennzeichnet**, daß die Heizfolien mittels eines thermische Energie leitenden Klebers auf den Prismenflächen (1-3) aufgebracht sind.

5. Retroreflektor nach mindestens einem der Ansprüche 2 bis 4, **dadurch gekennzeichnet**, daß die Heizelemente (5-7; 8-10) flächen- und formgleich sind sowie bezüglich der trigonalen Achse des Retroreflektors symmetrisch auf den gleichschenkligen Prismenflächen (1-3) positioniert sind.

6. Retroreflektor nach mindestens einem der Ansprüche 2 bis 5, **dadurch gekennzeichnet,** daß die Heizelemente jeweils streifen- oder gitterförmig angeordnet sind.

7. Retroreflektor nach mindestens einem der vorhergehenden Ansprüche, **dadurch gekennzeichnet**, daß zumindest auf die gleichschenkligen Prismenflächen (1-3) eine Schicht oder ein Schichtsystem, die oder das zur Erhöhung der Reflexion der einfallenden elektromagnetischen Strahlung dient, aufgebracht ist, auf welche die Heizelemente aufgebracht sind.

8. Retroreflektor nach mindestens einem der vorhergehenden Ansprüche , **dadurch gekennzeichnet**, daß auf die gleichseitige Prismenfläche (4) eine Schicht oder ein Schichtsystem, die oder das zur Verminderung der Reflexion der einfallenden elektromagnetischen Strahlung dient, aufgebracht ist.

9. Retroreflektor nach mindestens einem der vorherigen Ansprüche, **dadurch gekennzeichnet**, daß auf bzw. vor der Eintrittsfläche (4) ein für die einfallende Strahlung transparentes Heizelement aufgebracht ist.

10. Retroreflektor nach Anspruch 9, **dadurch gekennzeichnet**, daß als Heizelement eine mittels Abscheideverfahren, wie Vakuumverdampfung, Sputtern oder dergleichen hergestellte, direkt auf die Eintrittsfläche (4) aufgebrachte, elektrisch beheizbare transparente Schicht (13) vorgesehen ist.

11. Retroreflektor nach mindestens einem der Ansprüche 1 bis 8 , **dadurch gekennzeichnet**, daß als Heizelement eine mittels Abscheideverfahren, wie Vakuumverfampfung, Sputtern oder dergleichen hergestellte, auf ein transparentes Substrat (14) aufgebrachte, elektrisch beheizbare transparente Schicht (13) vorgesehen ist, wobei das Substrat (14) mittels Verbindungstechniken auf der Eintrittsfläche (4) des Retroreflektors befestigbar ist.

12. Retroreflektor nach mindestens einem der vorhergehenden Ansprüche, **dadurch gekennzeichnet,** daß das Heizelement mittels mechanischer Haltevorrichtungen unmittelbar vor der Eintrittsfläche (4) - vorzugsweise austauschbar - befestigt ist.

13. Retroreflektor nach mindestens einem der Ansprüche 9 bis 12, **dadurch gekennzeichnet**, daß das Heizelement bzw. die Schicht (13) bzw. das Substrat (14) nicht die gesamte Eintrittsfläche (4) bedeckt.

14. Retroreflektor nach Anspruch 13, **dadurch gekennzeichnet**, daß das Heizelement bzw. die Schicht (13) bzw. das Substrat (14) die Flächenform eines gleichseitigen Dreiecks mit dem Auflagepunkt (12) als Flächenschwerpunkt aufweist.

15. Retroreflektor nach mindestens einem der Ansprüche 2 bis 8, **dadurch gekennzeichnet**, daß die Heizfolien in Kontakt mit Leitungszügen stehen, die eine elektrische Verbindung mit einer Energiequelle herstellen.

16. Retroreflektor nach mindestens einem der vorhergehenden Ansprüche , **dadurch gekennzeichnet,** daß er aus Glas, Glaskeramik oder Quarzglas besteht.

17. Retroreflektor nach mindestens einem der vorhergehenden Ansprüche , **dadurch gekennzeichnet,** daß Retroreflektoren gleicher Art zu einer Gruppe in Array- oder Matrix-Anordnung zusammengefaßt sind.

18. Retroreflektor nach mindestens einem der Ansprüche 11, 13 und 14, **dadurch gekennzeichnet**, daß das Substrat (14) als planparallele Platte ausgebildet ist und aus Glas, Glaskeramik, Quarzglas oder organischem Material besteht.

## Claims

1. Heatable retroreflector, which is constructed as a solid body in the form of a triple-reflector prism and has three equilateral triangular prism surfaces (1, 2, 3) as well as an equal-sided triangular prism surface (4), wherein the retroreflector comprises an electrical heat source for heating of the prism surfaces, characterised in that the electrical heat source consists of several electrical heating elements (5, 6, 7; 8, 9, 10; 13) and that at least the three equilateral prism surfaces (1 to 3) of the triple-reflector prism are directly and equally heated by the heat source, which is disposed in direct contact with these surfaces.

2. Retroreflector according to claim 1, characterised in that at least one respective heating element (5 to 7; 8 to 10) is mounted at each of the equilateral prism surfaces (1 to 3).

3. Retroreflector according to claim 2, characterised in that the heating elements (5 to 10) are constructed as heating foils.

4. Retroreflector according to at least one of claims 2 and 3, characterised in that the heating foils are mounted on the prism surfaces (1 to 3) by means of an adhesive conducting thermal energy.

5. Retroreflector according to at least one of claims 2 to 4, characterised in that the heating elements (5 to 7; 8 to 10) are equal in area and shape and are positioned symmetrically on the equilateral prism surfaces (1 to 3) with respect to the trigonal axis of the retroreflector.

6. Retroreflector according to at least one of claims 2 to 5, characterised in that the heating elements are each arranged in strip shape or grid shape.

7. Retroreflector according to at least one of the preceding claims, characterised in that a layer or a layer system, which serves for increasing the reflection of the incident electromagnetic radiation and on which the heating elements are mounted, is mounted at least on the equilateral prism surfaces (1 to 3).

8. Retroreflector according to at least one of the preceding claims, characterised in that a layer or layer system, which serves for reducing the reflection of the incident electromagnetic radiation, is mounted on the equal-sided prism surface (4).

9. Retroreflector according to at least one of the preceding claims, characterised in that a heating element transparent to the incident radiation is mounted on or in front of the entry surface (4).

10. Retroreflector according to claim 9, characterised in that an electrically heatable transparent layer (13), which is applied directly to the entry surface and produced by means of a deposition process, such as vacuum evaporation, sputtering or the like, is provided as heating element.

11. Retroreflector according to at least one of claims 1 to 8, characterised in that an electrically heatable transparent layer (13), which is applied to a transparent substrate (14) and produced by means of a deposition process, such as vacuum evaporation, sputtering or the like, is provided as heating element, wherein the substrate (14) is fastenable to the entry surface (4) of the retroreflector by means of connecting techniques.

12. Retroreflector according to at least one of the preceding claims, characterised in that the heating element is fastenable directly in front of the entry surface (4) - preferably exchangeably - by means of mechanical retaining devices.

13. Retroreflector according to at least one of claims 9 to 12, characterised in that the heating element or the layer (13) or the substrate (14) does not cover the entire entry surface (4).

14. Retroreflector according to claim 13, characterised in that the heating element or the layer (13) or the substrate (14) has the areal shape of an equal-sided triangle with the support point (12) as surface centre of gravity.

15. Retroreflector according to at least one of claims 2 to 8, characterised in that the heating foils stand in contact with conductor lines, which produce an electrical connection with an energy source.

16. Retroreflector according to at least one of the preceding claims, characterised in that it consists of glass, glass-ceramic or quartz-glass.

17. Retroreflector according to at least one of the preceding claims, characterised in that retroreflectors of the same kind are combined into a group in array or matrix arrangement.

18. Retroreflector according to at least one of claims 11, 13 and 14, characterised in that the substrate (14) is constructed as a plano-parallel plate and consists of glass, glass-ceramic, quartz glass or organic material.

## Revendications

1. Rétroréflecteur chauffable, qui est configuré comme un corps plein sous la forme d'un prisme à miroir triple et qui présente trois surfaces de prisme triangulaires, isocèles (1, 2, 3) ainsi qu'une surface de prisme triangulaire équilatérale (4) et le rétroréflecteur présente une source de chaleur électrique pour chauffer les surfaces de prisme, caractérisé en ce que la source de chaleur électrique se compose de plusieurs éléments chauffants électriques (5, 6, 7 ; 8, 9, 10 ; 13) et en ce qu'au moins les trois surfaces isocèles de prisme (1-3) du prisme à miroir triple sont chauffées de façon directe et identique par la source de chaleur qui se trouve en contact direct avec ses surfaces.

2. Rétroréflecteur selon la revendication 1, caractérisé en ce que sur les surfaces isocèles de prisme (1-3) est appliqué au moins un élément chauffant (5-7 ; 8-10).

3. Rétroréflecteur selon la revendication 2, caractérisé en ce que les éléments chauffants (5-10) sont configurés comme des feuilles chauffantes.

4. Rétroréflecteur selon au moins l'une des revendications 2 et 3, caractérisé en ce que les feuilles chauffantes sont appliquées sur les surfaces de prisme (1-3) au moyen d'une colle conductrice de l'énergie thermique.

5. Rétroréflecteur selon au moins l'une des revendications 2 à 4, caractérisé en ce que les éléments chauffants (5-7 ; 8-10) sont identiques par leur surface et leur forme et sont également placés relativement à l'axe trigonal du rétroréflecteur symétriquement sur les surfaces isocèles de prisme (1-3).

6. Rétroréflecteur selon au moins l'une des revendications 2 à 5, caractérisé en ce que les éléments chauffants sont agencés en forme de raies ou de réseau.

7. Rétroréflecteur selon au moins l'une des revendications précédentes, caractérisé en ce qu'au moins sur les surfaces isocèles de prisme (1-3) est appliquée une couche ou un système de couches, qui sert à l'augmentation de la réflexion du rayonnement électromagnétique incident, où sont appliqués les éléments chauffants.

8. Rétroréflecteur selon au moins l'une des revendications précédentes, caractérisé en ce que sur la surface équilatérale de prisme (4) est appliquée une couche ou un système de couches qui sert à la diminution de la réflexion du rayonnement électromagnétique incident.

9. Rétroréflecteur selon au moins l'une des revendications précédentes, caractérisé en ce que sur ou respectivement avant la surface d'entrée (4) est appliqué un élément chauffant transparent pour le rayonnement incident.

10. Rétroréflecteur selon la revendication 9, caractérisé en ce que, comme élément chauffant, est prévue une couche transparente électriquement chauffable (13) appliquée directement sur la surface d'entrée (4) par un processus de dépôt comme une vaporisation sous vide, une pulvérisation ou analogue.

11. Rétroréflecteur selon au moins l'une des revendications 1 à 8, caractérisé en ce qu'en tant qu'élément chauffant, est prévue une couche transparente électriquement chauffable (13) appliquée sur un substrat transparent (14) au moyen d'un procédé de dépôt comme une vaporisation sous vide, une pulvérisation ou analogue et le substrat (14) peut être fixé par des techniques de liaison sur la surface d'entrée (4) du rétroréflecteur.

12. Rétroréflecteur selon au moins l'une des revendications précédentes, caractérisé en ce que l'élément chauffant est fixé par des dispositifs mécaniques de retenue directement devant la surface d'entrée (4), avantageusement de façon échangeable.

13. Rétroréflecteur selon au moins l'une des revendications 9 à 12, caractérisé en ce que l'élément chauffant ou respectivement la couche (13) ou respectivement le substrat (14) ne couvre pas toute la surface d'entrée (4).

14. Rétroréflecteur selon la revendication 13, caractérisé en ce que l'élément chauffant ou respectivement couche (13) ou respectivement le substrat (14) présente la forme de surface d'un triangle équilatéral avec le point d'appui (12) en tant que barycentre de la surface.

15. Rétroréflecteur selon au moins l'une des revendications 2 à 8, caractérisé en ce que les feuilles chauffantes sont en contact avec des câbles conducteurs, qui produisent une liaison électrique avec une source d'énergie.

16. Rétroréflecteur selon au moins l'une des revendications précédentes, caractérisé en ce qu'il se compose de verre, de vitrocéramique ou de verre de quartz.

17. Rétroréflecteur selon au moins l'une des revendications précédentes, caractérisé en ce que des rétroréflecteurs d'un type identique sont rassemblés en un groupe dans un agencement en système ou en matrice.

18. Rétroréflecteur selon au moins l'une des revendications 11, 13 et 14, caractérisé en ce que le substrat (14) est configuré comme une plaque à surfaces planes et parallèles en verre, vitrocéramique, verre de quartz ou matière organique.
